Europäisches Patentamt

European Patent Office

Office européen des brevets

(19)

(11) **EP 0 463 549 B1**

(12) ## EUROPÄISCHE PATENTSCHRIFT

(45) Veröffentlichungstag und Bekanntmachung des Hinweises auf die Patenterteilung:
**28.08.1996 Patentblatt 1996/35**

(51) Int Cl.[6]: **G01F 1/68**, G01P 5/12

(21) Anmeldenummer: **91110010.5**

(22) Anmeldetag: **19.06.1991**

(54) **Flächenwiderstand für Anemometer**

Surface resistor for anemometer

Résistance de surface pour des anémomètres

(84) Benannte Vertragsstaaten:
**DE FR GB IT**

(30) Priorität: **22.06.1990 DE 9006967 U**

(43) Veröffentlichungstag der Anmeldung:
**02.01.1992 Patentblatt 1992/01**

(73) Patentinhaber: **SENSYCON GESELLSCHAFT FÜR INDUSTRIELLE SENSORSYSTEME UND PROZESSLEITTECHNIK MBH**
**D-30179 Hannover (DE)**

(72) Erfinder:
• **Huck, Ralf**
  **W-6450 Hanau 9 (DE)**

• **Eckert, Karlheinz**
  **W-6466 Gründau (DE)**

(74) Vertreter: **Presting, Hans-Joachim, Dipl.-Ing. et al Meissner & Meissner, Patentanwaltsbüro, Postfach 330130 14171 Berlin (DE)**

(56) Entgegenhaltungen:
**EP-A- 0 376 144**      **DE-A- 3 617 770**
**DE-A- 3 638 138**      **DE-A- 3 823 642**
**US-A- 4 761 995**      **US-A- 4 843 882**

## Beschreibung

Die Erfindung bezieht sich auf ein Widerstandselement bestimmt insbesondere für ein Anemometer zur Messung der Strömungsgeschwindigkeit oder des Massenstroms von Gasen oder Fluiden gemäß Anspruch 1.

Um insbesondere bei Brennkraftmaschinen einen optimalen Verbrennungsablauf zu erzielen, müssen genaue Informationen über die jeweils angesaugte Luftmenge zur Verfügung stehen. In Abhängigkeit davon können der Zündzeitpunkt, die einzuspritzende Kraftstoffmenge und ähnliches geregelt werden.

Zur Messung der Strömungsgeschwindigkeit bzw. des Massenstroms von Gasen und Flüssigkeiten gelangen Anemometer zum Einsatz, die vom Aufbau hinreichend bekannt sind. Grundsätzlich weisen diese zwei temperaturabhängige elektrische Widerstände mit zumindest einem temperaturunabhängigen elektrischen Widerstand auf, die zu einer Brücke geschaltet sind. Einer der temperaturabhängigen elektrischen Widerstände wird elektrisch beheizt und der Strömung des zu messenden Fluids ausgesetzt. Mit dem anderen temperaturabhängigen Widerstand wird die Temperatur des Fluids selbst gemessen. Eine elektrische Regelschaltung sorgt dafür, daß der beheizte elektrische Widerstand auf einer konstanten Differenztemperatur relativ zur Temperatur des Fluides gehalten wird.

Widerstandselemente für Anemometer sind z.B. der DE-B 26 49 040 oder der DE-C 31 27 081 zu entnehmen. Die aus elektrisch isolierendem Material bestehenden plattenförmigen Substrate als Träger für den Flächenwiderstand sind mit ihren größten Flächen parallel zur Strömungsrichtung der Gase bzw. Flüssigkeiten ausgerichtet, wobei vorzugsweise nur auf einer gegebenenfalls jedoch auch auf beiden größten Flächen Flächenwiderstände z.B. durch Aufdampfen aufgebracht sind. Durch Trennschnitte werden sodann Kontaktflächen und Stromlaufbahnen voneinander getrennt, wobei letztere mäanderförmig mit senkrecht zur Strömungsrichtung zeigender Hauptrichtung verlaufen. Die mit den Stromzu- bzw. -abführungen verbundenen Kontaktflächen verlaufen in den Randbereichen, in denen das Substrat von einer Halterung ausgenommen wird.

Durch die vorliegende Erfindung soll unter anderem das Problem gelöst werden, ein Widerstandselement insbesondere bestimmt für ein Anemometer der eingangs genannten Art so weiterzubilden, daß der Flächenwiderstand in seiner aktiven Fläche, also in dem Bereich, wo die vorzugsweise mäanderförmig verlaufende Stromlaufbahn vorgesehen ist, unabhängig von dem Einsatzbereich und auch nach langer Betriebszeit unverändert bleibt. Insbesondere soll ausgeschlossen werden, daß in dem Bereich der aktiven Fläche z.B. Schmutz oder Feuchtigkeit eindringen kann. Auch soll das Problem der Temperaturanpassung bei der Änderung der Strömungsgeschwindigkeit bzw. des Massenstromes dahingehend gelöst werden, daß sich nahezu trägheitslos ein stabiler Temperaturzustand des temperaturabhängigen Flächenwiderstandes einstellt.

Das Problem wird erfindungsgemäß im wesentlichen dadurch gelöst, daß zumindest die aktive Fläche des Flächenwiderstandes zumindest zu der Anströmkante des Substrats beabstandet verläuft und daß sich die Deckschicht zumindest im Bereich der aktiven Fläche bis zu dem Substrat erstreckt. Vorzugsweise verläuft der Flächenwiderstand zumindest im Bereich seiner aktiven Fläche sowohl zu der Anströmkante als auch zu der dieser gegenüberliegenden Kante beabstandet, wobei sich die Deckschicht bis zu dem Substrat erstreckt.

Durch die erfindungsgemäßen Maßnahmen ist folglich sichergestellt, daß die Deckschicht den Flächenwiderstand zumindest im Bereich seiner aktiven Fläche, also dem Bereich, in dem Signale erzeugt werden, die Rückschlüsse auf die Strömungsgeschwindigkeit bzw. den Massenstrom von Gasen und Flüssigkeiten bzw. der Temperatur dieser ermöglichen, vollständig abdeckt, so daß sich infolgedessen in diesem Bereich weder Schmutzpartikel ablagern noch insbesondere Feuchtigkeit eindringen kann, wodurch eine Veränderung des Flächenwiderstandes in seinem aktiven Bereich erfolgen würde, was wiederum zur Verfälschung der gewonnenen Signale führen würde.

Reicht es zwar grundsätzlich aus, daß der Flächenwiderstand im Bereich seiner aktiven Fläche beabstandet zu der Anströmkante bzw. der der gegenüberliegenden Kante des Substrats verläuft, so ist aus Gründen der Vereinfachung der Herstellung vorgesehen, daß der gesamte Flächenwiderstand zu der Anströmkante des Substrats und auch vorzugsweise zu der der Anströmkante gegenüberliegenden Kante des Substrats beabstandet verläuft, wobei sich dann selbstverständlich die Deckschicht bis zu der Substratfläche selbst erstreckt.

Nach einem weiteren hervorzuhebenden eigenständigen Vorschlag besteht die Deckschicht selbst aus zwei Schichten, von denen die dem Flächenwiderstand bzw. dem Substrat zugewandte (erste) Schicht einen Schmelzpunkt besitzt, der niedriger als der des Substrats ist. Dabei kann die erste Schicht vorzugsweise als wesentlichen Bestandteil Bleioxid aufweisen. Die erste Schicht kann z.B. im Siebdruckverfahren aufgebracht und anschließend eingebrannt werden.

Die zweite, also die äußere Schicht kann ihrerseits aus Siliziumoxid bestehen und z.B. durch Aufdampfen auf die erste Schicht aufgebracht werden.

Die erste Schicht kann eine Dicke von in etwa 10 μm ± 4 μm und die zweite Schicht eine Dicke von in etwa 2 μm ± 1 μm aufweisen.

Durch diesen Schichtaufbau sind folgende Vorteile erreichbar. Durch die erste, in Dickschichttechnik auftragbare Schicht erfolgt eine "Begradigung" der durch das Trennen des Flächenwiderstandsmaterials zur Gewinnung der Stromlaufbahn entstandenen Unebenheiten dahingehend, daß eine vollständige Abdeckung von Flächenwiderstand und Substrat erfolgt. Sogenannte

"Pin holes" können dann nicht mehr vorliegen. Da der Schmelzpunkt der ersten Schicht niedriger als der des Substrats liegt, kann durch das Auftragen der Schicht auch keine Geometrieveränderung des Substrats erfolgen.

Um sicherzustellen, daß die niedrigschmelzende erste Schicht nicht angegriffen werden kann, wird diese durch die äußere Schicht "versiegelt", so daß sich als Ergebnis eine chemisch resistente und lochfreie Gesamtabdeckung ergibt.

Um sicherzustellen, daß Wärme über den Flächenwiderstand nicht zu der Halterung fließen kann, wodurch andernfalls eine zu schlechteren Meßergebnissen führende "langsame" Temperatureinstellung des temperaturabhängigen Flächenwiderstandes erfolgen würde, ist vorgesehen, daß die Länge L und die Breite B des Substrats erheblich größer als dessen Dicke D sind und daß die aktive Fläche ($F_w$) des Flächenwiderstandes zu dem bzw. den halterungsseitigen Randbereich bzw. Randbereichen ($F_R$) sich verhält wie $1/1 < F_w/F_R < 3/1$.

Durch diese Maßnahme wird sichergestellt, daß der bzw. die halterungsseitigen Randbereiche des Substrats durch den Flächenwiderstand im wesentlichen nicht erwärmt werden, so daß infolgedessen auch eine Wärmeableitung zu der Halterung nicht erfolgen kann. Es stellt sich also nahezu trägheitslos ein stabiler Temperaturzustand des temperaturabhängigen Flächenwiderstandes ein.

Durch die Dimensionierung von nicht erwärmbarem bzw. erwärmbaren Randbereich bzw. Randbereichen zu der aktiven Fläche des Flächenwiderstandes ist dahingehend eine Optimierung erzielbar, daß trotz "Reduzierung" der aktiven Fläche hinreichend große Signale gewonnen werden können, die die gewünschten Rückschlüsse auf die Strömungsgeschwindigkeit bzw. den Massenstrom von Gasen und von Flüssigkeiten bzw. deren Temperatur zulassen.

Ein Widerstandselement bestimmt insbesondere für ein Anmemoter zur Messung der Strömungsgeschwindigkeit oder des Massenstroms von Gasen oder Flüssigkeiten mit einem quaderförmigen und vorzugsweise aus Glasmaterial bestehenden eine Anströmkante aufweisenden Substrat, auf das ein temperaturabhängiger Flächenwiderstand aufgebracht ist, auf dem seinerseits eine Deckschicht angeordnet ist, wobei der Flächenwiderstand eine aktive Fläche mit vorzugsweise mäanderförmig verlaufender Stromlaufbahn und zumindest einen angrenzenden halterungsseitigen Randbereich umfaßt, von dem Stromzu- bzw. -abführungen ausgehen, zeichnet sich dadurch aus, daß die aktive Fläche $F_w$ des Flächenwiderstands zu dem bzw. den halterungsseitigen Randbereich bzw. Randbereichen $F_R$ sich verhält wie

$$1/1 < F_w/F_R < 3/1,$$

daß zumindest die aktive Fläche des Flächenwiderstandes zumindest zu der Abströmkante des Substrats beabstandet verläuft, daß sich die Deckschicht zumindest im Bereich der aktiven Fläche bis zu dem Substrat erstreckt und daß die Deckschicht aus zwei Schichten besteht, von denen die dem Flächenwiderstand bzw. dem Substrat zugewandte (erste) Schicht einen Schmelzpunkt besitzt, der niedriger als der des Substrats ist.

Weitere Einzelheiten, Vorteile und Merkmale der Erfindung ergeben sich nicht nur aus den Schutzansprüchen, den diesen zu entnehmenden Merkmalen -für sich und/oder in Kombination-, sondern auch aus der nachfolgenden Beschreibung eines der Zeichnung zu entnehmenden bevorzugten Ausführungsbeispiels.

Es zeigen:

Fig. 1 eine Draufsicht eines Widerstandselementes mit weggelassener Deckschicht und

Fig. 2 eine Schnittdarstellung entlang der Linie II-II in Fig. 1.

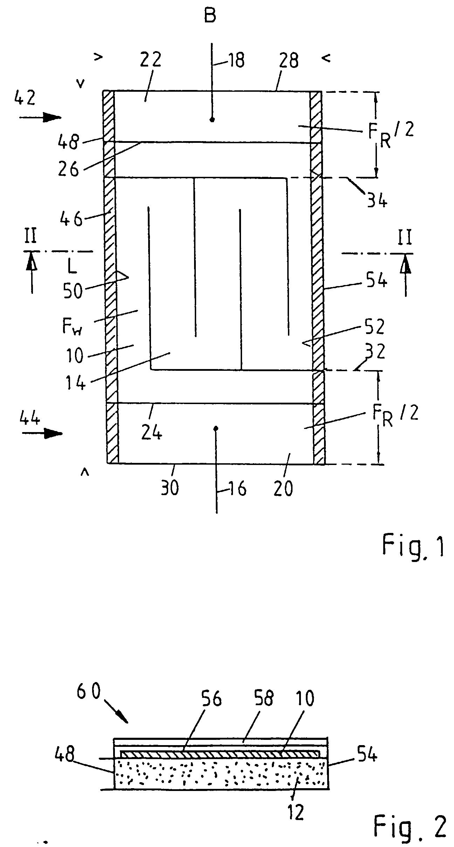

In Fig. 1 ist in Draufsicht ein Widerstandselement bestimmt für ein Anemometer dargestellt. So ist auf einem quaderförmigen, vorzugsweise plattenförmigen und aus Glas bestehenden Substrat (12) im wesentlichen ganzflächig ein temperaturabhängiger Flächenwiderstand (10) aufgebracht. Das Material des Flächenwiderstandes (10) kann z.B. aus Platin bestehen und ist durch Sputtern oder andere bekannte Techniken auf die große Fläche des Substrats (10) aufgebracht worden. Durch z. B. Ätztechnik oder durch Trennen mittels Laserstrahls wird eine mäanderförmig verlaufende Stromlaufbahn (14) eingeprägt, durch die über Anschlüsse (16) und (18) Strom fließt, um so die gewünschte Erwärmung des Flächenwiderstandes (10) und damit des Substrats (12) zu bewirken. Der Bereich, in dem die mäanderförmig verlaufende Stromlaufbahn verläuft, ist die aktive Fläche des Flächenwiderstandes (10). Die aktive Fläche verläuft zwischen den gestrichelten Linien (32) und (34) und wird allgemein angegeben mit $F_w$.

Außenseitig, also im Bereich der Querseiten (28) und (30) schließen sich die halterungsseitigen Randbereiche (20) und (22) an. Die Breite dieser Randbereiche (20) und (22) ist im Vergleich zu der Breite der mäanderförmigen Stromlaufbahn (14) relativ groß, so daß eine Erwärmung in den Randbereichen (20), (22) aufgrund des geringeren Widerstandes vernachlässigbar ist.

Die Randbereiche (20) und (22) sind allgemein mit $F_R/2$ bezeichnet, so daß die Gesamtfläche der Randbereiche (20) und (22) $F_R$ beträgt.

In diesem Zusammenhang ist darauf hinzuweisen, daß die Randbereiche (20) und (22) selbstverständlich flächenmäßig nicht gleich groß sein müssen. Die Gesamtfläche wird jedoch mit $F_R$ bezeichnet, um diese in nachstehend beschriebener Weise mit der aktiven Fläche $F_w$ vergleichen zu können.

Damit eine nahezu trägheitslose Temperatureinstellung erfolgt, weist das Substrat (12) in bezug auf seine Länge L, Breite B und Dicke D eine Dimensionierung derart auf, daß die Dicke D überaus gering im Vergleich zu der Länge L und der Breite B ist. Vorzugsweise ist die Dicke D 10 bis 30 mal geringer als die Breite B, die ihrerseits 5 bis 10 mal kleiner als die Länge L sein kann. Selbstverständlich besteht auch die Möglichkeit, Länge und Breite gleich zu wählen.

Sofern eine Rechteckform gewählt wird, kann die Länge L z. B. 12 mm und die Breite B 2 mm bei einer Dicke zwischen 150 μm und 200 μm betragen. Andere Dimensionierungen sind gleichfalls möglich, wobei jedoch erwähntermaßen darauf zu achten ist, daß die Dicke D überaus gering im Vergleich zu der Länge L und der Breite B ist.

Eine Optimierung der Anordnung ergibt sich des weiteren dann, wenn sich die stirnseitigen nicht erwärmbaren Randbereiche $F_R$ zu der aktiven Fläche $F_W$ des Flächenwiderstandes (10) verhalten wie:

$$1/1 < F_W/F_R < 3/1.$$

Bei einem quaderförmigen Substrat einer Länge L = 12 mm und einer Breite B = 2 mm kann die Länge der aktiven Fläche $F_W$, also der Abstand zwischen den Linien (32) und (34) bei einem beheizten temperaturabhängigen Flächenwiderstand 8 mm und bei einem unbeheizten temperaturabhängigen Widerstand 7 mm betragen (Der beheizte temperaturabhängige Widerstand kann in seiner aktiven Fläche einen Widerstandswert von 9 Ohm, der unbeheizte temperaturabhängige Widerstand kann einen Widerstandwert von 1000 Ohm aufweisen).

Wie die Fig. 1 verdeutlichen soll, wird das Substrat (12) von links angeströmt (Pfeile (42) und (44)), so daß das Fluid auch auf den als Anströmkante zu bezeichnenden linken Längsrand (48) des Substrates (12) prallt. Erfindungsgemäß ist nun vorgesehen, daß im Anströmbereich das Widerstandsmaterial (10) zu der Anströmkante (48) beabstandet verläuft. Dieser Längsrand des Widerstandsmaterials ist mit dem Bezugszeichen (50) versehen. Folglich bildet sich zwischen dem linken Rand (50) des Flächenwiderstandes (10) und der Anströmkante (48) des Substrats ein freier Bereich (46) aus. Eine entsprechende Ausbildung ist vorzugsweise auch auf der der Anströmkante (48) gegenüberliegenden Seite vorgesehen. Folglich verläuft der rechte Rand (52) des Flächenwiderstandes (10) im Abstand zu dem rechten Rand (54) des Substrates (12).

Die Breite des anströmseitigen freien Bereichs (46) liegt in der Größenordnung von 0,05 mm bis 0,15 mm.

Um sicherzustellen, daß zwischen dem Flächenwiderstand (10) und dem Substrat (12) keine Schmutzpartikel, Feuchtigkeit oder ähnliches eindringen können, wodurch sich der Widerstandswert der aktiven Fläche $F_W$ unkontrolliert verändern würde, ist der Flächenwiderstand (10) zumindest im Bereich der aktiven Fläche $F_W$, vorzugsweise jedoch über diesen hinaus (in Fig. 1 zwischen den Linien (24) und (26)) mit einer aus einer ersten Schicht (56) und einer auf dieser angeordneten zweiten Schicht (58) zusammengesetzten Deckschicht (60) abgedeckt, quasi "versiegelt". Die Deckschicht (60) erstreckt sich dabei bis zu dem freien Substratrandbereich, also weitgehend bis zur Anströmkante (48) bzw. der gegenüberliegenden Kante (54). Durch diese Maßnahme ist sichergestellt, daß in das Widerstandsmaterial bzw. zwischen diesem und dem Substrat (10) keine Schmutzpartikel, Feuchtigkeit oder ähnliches eindringen können.

Die erste Schicht (56) besteht aus einem Material, dessen Schmelzpunkt niedriger als der des Substrates (12) liegt. Es kann sich bei dem Material der ersten Schicht (56) um ein im wesentlichen aus Bleioxid bestehendes Glas handeln. Auf der vorzugsweise im Siebdruckverfahren aufgebrachten ersten Schicht (56) ist die zweite Schicht (58) angeordnet, die aus Siliziumoxid ($SiO_x$) bestehen kann. Diese kann aufgedampft werden. Die äußere Schicht (58) stellt sicher, daß die innere Schicht (56) nicht angegriffen werden kann, wobei diese die Ausbildung von "Pin holes" ausschließt.

Die erste Schicht (56) kann eine Dicke von 10 μm ± 4 μm und die äußere Schicht (58) eine Dicke von 2 μm ± 1 μm aufweisen.

## Patentansprüche

1. Widerstandselement bestimmt insbesondere für ein Anemometer zur Messung der Strömungsgeschwindigkeit oder des Massenstroms von Gasen oder Fluiden mit einem quaderförmigen und vorzugsweise aus Glasmaterial bestehenden eine Anströmkante aufweisenden Substrat, auf das ein temperaturabhängiger Flächenwiderstand aufgebracht ist, auf dem seinerseits eine Deckschicht angeordnet ist, wobei der Flächenwiderstand eine aktive Fläche mit vorzugsweise mäanderförmig verlaufender Stromlaufbahn und zumindest einen angrenzenden halterungsseitigen Randbereich umfaßt, von dem Stromzu- bzw. -abführungen ausgehen,
**dadurch gekennzeichnet,**
daß die aktive Fläche $F_W$ des Flächenwiderstands (10) zu dem bzw. den halterungsseitigen Randbereich bzw. Randbereichen $F_R$ (20, 22) sich verhält wie $1/1 < F_W/F_R < 3/1$, daß zumindest die aktive Fläche $F_W$ des Flächenwiderstandes zumindest zu der Anströmkante (48) des Substrats (12) beabstandet verläuft, daß sich die Deckschicht (60) zumindest im Bereich der aktiven Fläche bis zu dem Substrat erstreckt und daß die Deckschicht aus zwei Schichten (56, 58) besteht, von denen die dem Flächenwiderstand bzw. dem Substrat zugewandte erste Schicht (56) einen Schmelzpunkt besitzt, der niedriger als der des Substrats ist.

2. Widerstandselement nach Anspruch 1,
**dadurch gekennzeichnet,**
daß der Flächenwiderstand (10) sowohl zu der Anströmkante (48) als auch zu der dieser gegenüberliegenden Kante (54) beabstandet verläuft und daß sich die Deckschicht (60) im Bereich der Anströmkante und der dieser gegenüberliegenden Kante bis zu dem Substrat erstreckt.

3. Widerstandselement nach Anspruch 1,
**dadurch gekennzeichnet,**
daß der gesamte Flächenwiderstand (10) zu der Anströmkante (48) des Substrats (12) beabstandet verläuft.

4. Widerstandselement nach Anspruch 2,
**dadurch gekennzeichnet,**
daß der gesamte Flächenwiderstand (10) zu der Anströmkante (48) und der gegenüberliegenden Kante (54) des Substrats (12) beabstandet verläuft.

5. Widerstandselement nach einem der vorhergehenden Ansprüche,
**dadurch gekennzeichnet,**
daß die erste Schicht (56) Bleioxid als wesentlichen Bestandteil enthält und/oder die äußere zweite Schicht (58) aus Siliziumoxid besteht.

6. Widerstandselement nach einem der vorhergehenden Ansprüche,
**dadurch gekennzeichnet,**
daß die erste Schicht (56) im Siebdruckverfahren aufgebracht ist und/oder die zweite Schicht (58) auf die erste Schicht (56) aufgedampft ist.

7. Widerstandselement nach einem der vorhergehenden Ansprüche,
**dadurch gekennzeichnet,**
daß die erste Schicht (56) eine Dicke von in etwa 10 μm ± 4 μm und/oder die zweite Schicht (58) eine Dicke von in etwa 2 μm ± 1 μm aufweist.

8. Widerstandselement nach zumindest Anspruch 1,
**dadurch gekennzeichnet,**
daß die Länge L und die Breite B des Substrats (12) erheblich größer als dessen Dicke D sind.


**Claims**

1. A resistance element intended in particular for an anemometer for the measurement of the speed of flow or of the mass flow of gases or fluids with a substrate which is parallelepiped-shaped and preferably consists of glass material, having a leading edge, onto which a temperature-dependent surface resistance is applied, on which in turn a cover layer is arranged, in which the surface resistance comprises an active surface with a flow path preferably running in a meandering form and at least one adjoining marginal region on the mounting side, from which deliveries or withdrawals of flow begin, characterised in that
the active surface $F_W$ of the surface resistance (10) behaves with respect to the marginal region or marginal regions $F_R$ (20, 22) on the mounting side as $1/1 < F_W/F_R < 3/1$, that at least the active surface $F_W$ of the surface resistance runs at a distance at least from the leading edge (48) of the substrate (12), that the cover layer (60) at least in the region of the active surface extends up to the substrate and that the cover layer consists of two layers (56, 58), of which the first layer (56), facing the surface resistance or the substrate, has a melting point which is lower than that of the substrate.

2. A resistance element according to Claim 1,
characterised in that
the surface resistance (10) runs at a distance both from the leading edge (48) and also from the edge (54) lying opposite thereto and that the cover layer (60) extends up to the substrate in the region of the leading edge and of the edge lying opposite thereto.

3. A resistance element according to Claim 1,
characterised in that
the entire surface resistance (10) runs at a distance from the leading edge (48) of the substrate (12).

4. A resistance element according to Claim 2,
characterised in that
the entire surface resistance (10) runs at a distance from the leading edge (48) and from the opposite edge (54) of the substrate (12).

5. A resistance element according to one of the preceding claims,
characterised in that
the first layer (56) contains lead oxide as a substantial component and/or the outer second layer (58) consists of silicon oxide.

6. A resistance element according to one of the preceding claims,
characterised in that
the first layer (56) is applied by the screen-printing process and/or the second layer (58) is deposited by evaporation onto the first layer (56).

7. A resistance element according to one of the preceding claims,
characterised in that
the first layer (56) has a thickness of approximately 10 μm ± 4 μm and/or the second layer (58) has a thickness of approximately 2 μm ± 1 μm.

8. A resistance element according to at least Claim 1,
characterised in that
the length L and the width B of the substrate (12) are considerably greater than its thickness D.

**Revendications**

1. Elément de résistance déterminé en particulier pour un anémomètre pour mesurer la vitesse d'écoulement ou le courant de masse de gaz ou de fluides, comportant un substrat de forme parallélépipédique, constitué de préférence de matériau en verre, et présentant un bord en amont, sur lequel est déposée une résistance superficielle dépendant de la température, sur laquelle est agencée une couche de recouvrement, la résistance superficielle présentant une face active avec de préférence une voie de circulation de courant s'étendant en forme de méandres, et au moins une zone marginale adjacente sur la face de fixation, de laquelle partent des amenées ou des évacuations de courant, caractérisé en ce que la face active $F_W$ de la résistance superficielle (10) se comporte vis-à-vis de la ou des zones marginales $F_R$ (20,22), de la face de fixation, de sorte que $1/1 < F_W/F_R < 3/1$, en ce qu'au moins la face active $F_W$ de la résistance superficielle s'étend au moins par rapport au bord en amont (48) du substrat (12) de façon écartée, en ce que la couche de recouvrement (60) s'étend au moins dans la zone de la face active jusqu'au substrat, et en ce que la couche de recouvrement est constituée de deux couches (56,58), desquelles la première couche (56) en regard de la résistance superficielle ou du substrat présente un point de fusion qui est inférieur à celui du substrat.

2. Elément de résistance selon la revendication 1, caractérisé en ce que la résistance superficielle (10) s'étend de façon écartée, aussi bien vers le bord en amont (48), que vers le bord (54) opposé à celui-ci, et en ce que la couche de recouvrement (60) s'étend, dans la zone du bord en amont et du bord opposé à celui-ci, jusqu'au substrat.

3. Elément de résistance selon la revendication 1, caractérisé en ce que la résistance superficielle globale (10) s'étend, de façon écartée, vers le bord en amont (48) du substrat (12).

4. Elément de résistance selon la revendication 2, caractérisé en ce que la résistance superficielle globale (10) s'étend, de façon écartée, vers le bord en amont (48) et le bord opposé (54) du substrat (12).

5. Elément de résistance selon l'une des revendications précédentes, caractérisé en ce que la première couche (56) comporte de l'oxyde de plomb comme composant essentiel et/ou la seconde couche externe (58) est constituée d'oxyde de silicium.

6. Elément de résistance selon l'une des revendications précédentes, caractérisé en ce que la première couche (56) est déposée par sérigraphie et/ou la seconde couche (58) est métallisée sous vide sur la première couche (56).

7. Elément de résistance selon l'une des revendications précédentes, caractérisé en ce que la première couche (56) présente une épaisseur d'à peu près 10 µm ± 4 µm et/ou la seconde couche (58) présente une épaisseur d'à peu près 2 µm ± 1 µm.

8. Elément de résistance selon au moins la revendication 1, caractérisé en ce que la longueur L et la largeur B du substrat (12) sont beaucoup plus grandes que son épaisseur D.

Fig. 1

Fig. 2